# EUROPÄISCHE PATENTSCHRIFT

(11) **EP 3 271 434 B1**
(45) Veröffentlichungstag und Bekanntmachung des Hinweises auf die Patenterteilung: **20.08.2025**
(21) Anmeldenummer: 16711796.9
(22) Anmeldetag: 11.03.2016
(51) Int. Cl.: C09J 5/02, H05H 1/24, H05H 1/34

(54) **NIEDERTEMPERATUR-PLASMABEHANDLUNG**
LOW TEMPERATURE PLASMA TREATMENT
TRAITEMENT AU PLASMA À BASSE TEMPÉRATURE

(30) Priorität: 17.03.2015 DE 102015204753
(43) Veröffentlichungstag der Anmeldung: 24.01.2018
(73) Patentinhaber: tesa SE, 22848 Norderstedt (DE)
(72) Erfinder: KOOPS, Arne, 23881 Neu-Lankau (DE); KEITE-TELGENBÜSCHER, Klaus, 22529 Hamburg (DE)
(74) Vertreter: tesa SE
(86) Internationale Anmeldenummer: PCT/EP2016/055227
(87) Internationale Veröffentlichungsnummer: WO 2016/146498

(56) Entgegenhaltungen:
- WO-A1-03/086031
- WO-A1-2012/152713
- WO-A1-2012/152714
- DE-A1- 102008 018 827
- DE-U1- 202008 008 980
- US-A1- 2008 118 734
- US-A1- 2009 068 375
- PLASMATREAT GMBH: "Kaltes Plasma erzeugen mit der Rotationsdüse RD1004 | Plasmatreat GmbH", 22 March 2016 (2016-03-22), XP055800479, Retrieved from the Internet <URL:https://web.archive.org/web/20160322214929/https://www.plasmatreat.de/produkte-anlagen/plasmaanlagen-komponenten/plasmaduesen/plasmaduese-rd1004_plasma-rotationsduese.html> [retrieved on 20210430]

## Beschreibung

Die Erfindung betrifft ein Verfahren zum Verkleben einer Substratoberfläche eines Substrates mit einer Klebemasseoberfläche einer Klebemasse.

Grundsätzlich besteht beim Aufeinanderkleben von Oberflächen mittels Klebemassen das Problem diese dauerhaft und fest auf die Oberfläche des Substrates aufzubringen. Dafür ist eine besonders hohe Adhäsion der Haftklebemasse an der Oberfläche notwendig. Als Adhäsion wird üblicherweise der physikalische Effekt bezeichnet, der den Zusammenhalt zweier miteinander in Kontakt gebrachter Phasen an ihrer Grenzfläche aufgrund dort auftretender intermolekularer Wechselwirkungen bewirkt. Die Adhäsion bestimmt somit das Anhaften der Klebemasse an der Substratoberfläche, die als Anfassklebrigkeit (dem sogenannten "Tack") und als Klebekraft bestimmbar ist. Um die Adhäsion einer Klebemasse gezielt zu beeinflussen, werden der Klebemasse häufig Weichmacher und/oder klebekraft-steigernde Harze (sogenannte "Tackifier") zugesetzt.

Eine einfache Definition der Adhäsion kann "die Wechselwirkungsenergie pro Einheitsfläche" [in mN/m] sein, wobei diese aufgrund experimenteller Einschränkungen wie Unkenntnis der wahren Kontaktflächen, nicht messbar ist. Weiterhin wird oft die Oberflächenenergie (OFE) beschrieben mit "polaren" und "unpolaren" Komponenten. Dieses vereinfachte Modell hat sich in der Praxis durchgesetzt. Gemessen werden diese Energie und ihre Komponenten oft mittels Messung der statischen Kontaktwinkel unterschiedlicher Testflüssigkeiten. Den Oberflächenspannungen dieser Flüssigkeiten werden polare und unpolare Anteile zugeordnet. Aus den beobachteten Kontaktwinkeln der Tropfen auf der Prüfoberfläche werden die polaren und unpolaren Anteile der Oberflächenenergie der Prüfoberfläche ermittelt. Dies kann zum Beispiel nach dem OWKR-Modell erfolgen. Eine industriell übliche alternative Methode ist die Bestimmung mittels Testtinten nach DIN ISO 8296.

Im Kontext solcher Diskussionen werden oft die Begriffe "polar" und "hochenergetisch" gleichgesetzt, ebenso die Begriffe "unpolar" und "niederenergetisch". Dahinter steht die Erkenntnis, dass polare Dipolkräfte vergleichsweise stark sind, gegenüber sogenannten "dispersen" oder "unpolaren" Wechselwirkungen, die ohne Beteiligung permanenter molekularer Dipole aufgebaut werden. Die Grundlage dieses Modells der Grenzflächenenergie und Grenzflächenwechselwirkungen ist die Vorstellung, dass polare Komponenten nur mit polaren wechselwirken und unpolare nur mit unpolaren.

Jedoch kann eine Oberfläche auch kleine oder mittlere polare Anteile an der Oberflächenenergie aufweisen, ohne dass die Oberflächenenergie "hoch" ist. Ein Richtwert kann sein, dass, sobald der polare Anteil der OFE größer ist als 3 mN/m, die Oberfläche im Sinne dieser Erfindung als "polar" zu bezeichnen ist. Dies entspricht in etwa der praktischen unteren Nachweisgrenze.

Grundsätzlich gibt es keine harten Grenzen für Begriffe wie hoch- und niederenergetisch. Für den Zweck der Diskussion wird die Grenze bei 38 mN/m beziehungsweise 38 dyn/cm (bei Raumtemperatur) gesetzt. Dies ist ein Wert, oberhalb dessen beispielsweise die Bedruckbarkeit einer Oberfläche meist hinreichend ist. Zum Vergleich kann man die Oberflächenspannung (=Oberflächenenergie) von reinem Wasser betrachten; diese liegt bei ca. 72 mN/m (unter anderem temperaturabhängig).

Insbesondere auf niederenergetischen Substraten wie PE, PP oder EPDM, aber auch vielen Lacken gibt es große Probleme bei der Erreichung zufriedenstellender Adhäsion, sowohl bei Verwendung von Haftklebemassen, als auch anderen Klebestoffen oder Beschichtungen.

Die physikalische Vorbehandlung von Untergründen (zum Beispiel durch Flamme, Corona, Plasma) zur Verbesserung von Verklebungsfestigkeiten ist vor allem bei flüssigen Reaktivklebestoffen üblich. Eine Aufgabe der physikalischen Vorbehandlung kann dabei auch eine Reinigung des Untergrunds sein, beispielsweise von Ölen, oder ein Aufrauen zur Vergrößerung der effektiven Fläche.

Bei einer physikalischen Vorbehandlung spricht man meist von einer "Aktivierung" der Oberfläche. Dies impliziert meist eine unspezifische Wechselwirkung im Gegensatz zu beispielsweise einer chemischen Reaktion nach dem Schlüssel-Schloss-Prinzip. Eine Aktivierung impliziert meistens eine Verbesserung von Benetzbarkeit, Bedruckbarkeit oder Verankerung einer Beschichtung.

Bei Selbstklebebändern ist ein Auftragen eines Haftvermittlers auf den Untergrund üblich. Dies ist aber oft ein fehleranfälliger, aufwändiger, manueller Schritt.

Der Erfolg bei der Verbesserung der Adhäsion von Haftklebemassen durch physikalische Vorbehandlung des Untergrunds (Flamme, Corona, Plasma) ist nicht universell, da unpolare Klebemassen wie zum Beispiel Synthesekautschuk typischerweise nicht davon profitieren.

Eine Coronabehandlung ist als eine durch hohe Wechselspannung zwischen zwei Elektroden erzeugte Oberflächenbehandlung mit filamentären Entladungen definiert, wobei die diskreten Entladungskanäle auf die zu behandelnde Oberfläche treffen, siehe dazu auch Wagner et al., Vacuum, 71 (2003), Seiten 417 bis 436. Ohne weitere Qualifizierung ist als Prozessgas Umgebungsluft anzunehmen.

Fast immer wird das Substrat im Entladungsraum zwischen einer Elektrode und einer Gegenelektrode platziert oder hindurchgeführt, was als "direkte" physikalische Behandlung definiert ist. Bahnförmige Substrate werden dabei typischerweise zwischen einer Elektrode und einer geerdeten Walze hindurchgeführt.

Insbesondere wird in industriellen Anwendungen meist unter dem Begriff "Corona" eine "dielektrische Barrierenentladung" (engl. dielectric barrier discharge, DBD) verstanden. Dabei besteht mindestens eine der Elektroden aus einem Dielektrikum, also einem Isolator, oder ist mit einem solchen beschichtet oder überzogen. Das Substrat kann hierbei auch als Dielektrikum fungieren.

Die Behandlungsintensität einer Coronabehandlung wird als "Dosis" in [Wmin/m²] angegeben, mit der Dosis D=P/b*v, mit P=elektrischer Leistung [W], b=Elektrodenbreite [m], und v=Bahngeschwindigkeit [m/min].

Fast immer wird das Substrat im Entladungsraum zwischen einer Elektrode und einer Gegenelektrode platziert oder hindurchgeführt, was als "direkte" physikalische Behandlung definiert ist. Bahnförmige Substrate werden dabei typischerweise zwischen einer Elektrode und einer geerdeten Walze hindurchgeführt. Manchmal wird noch der Begriff einer "ausgeblasenen Corona" beziehungsweise "einseitigen Corona" verwendet. Dies ist nicht vergleichbar mit einem Atmosphärendruckplasma, da sehr unregelmäßige Entladungsfilamente zusammen mit einem Prozessgas "ausgeblasen" werden und keine stabile, wohldefinierte, effiziente Behandlung möglich ist.

Aus der FR 2 443 753 ist eine Vorrichtung zur Oberflächenbehandlung mittels einer Coronaentladung bekannt. Dabei sind die beiden Elektroden auf der gleichen Seite der zu behandelnden Oberfläche des Objektes angeordnet, wobei die ersten Elektroden aus einer Vielzahl von Punkten gebildet sind, entlang derer eine gekrümmte Anordnung einer zweiten Elektrode vorgesehen ist. Zwischen den beiden Elektroden wird eine Wechselspannung mit einigen kV mit einer Frequenz von 10 kHz angelegt. Die Coronaentladung entlang der Feldlinien beeinflusst dabei die vorbeigeführte Oberfläche und führt zu einer Polarisierung der Oberfläche, wodurch die Haftungseigenschaften einer Haftklebemasse auf der durch den Coronaeffekt behandelten Oberfläche verbessert werden.

Nachteilig an der Vorrichtung ist jedoch, dass die Oberflächenbehandlung durch den Coronaeffekt schlecht steuerbar ist.

Eine gleichmäßigere intensive Coronabehandlung von Materialien verschiedener Art, Form und Dicke zu ermöglichen, besteht darin, den Coronaeffekt auf der Oberfläche des zu behandelnden Materials völlig zu vermeiden, indem gemäß der EP 0497996 B1 eine Doppelstiftelektrode gewählt wird, wobei für jede Stiftelektrode ein eigener Kanal zur Druckbeaufschlagung vorhanden ist. Zwischen den beiden Spitzen der Elektroden entsteht eine Coronaentladung, die den durch die Kanäle strömenden Gasstrom ionisiert und in ein Plasma umwandelt. Dieses Plasma gelangt dann an die zu behandelnde Oberfläche und führt dort insbesondere eine Oberflächenoxidation durch, welche die Benetzbarkeit der Oberfläche verbessert. Die Art der physikalischen Behandlung wird (hier) als indirekt bezeichnet, weil die Behandlung nicht am Erzeugungsort der elektrischen Entladung vorgenommen wird. Die Behandlung der Oberfläche findet bei oder nahe bei Atmosphärendruck statt, wobei jedoch der Druck im elektrischen Entladungsraum oder Gaskanal erhöht sein kann. Unter dem Plasma wird hier ein Atmosphärendruckplasma verstanden, das ein elektrisch aktiviertes homogenes reaktives Gas ist, das sich nicht im thermischen Equilibrium befindet, mit einem Druck nahe dem Umgebungsdruck im Wirkbereich. Im Allgemeinen beträgt der Druck 0,5 bar mehr als der Umgebungsdruck. Durch die elektrischen Entladungen und durch Ionisierungsprozesse im elektrischen Feld wird das Gas aktiviert, und es werden hochangeregte Zustände in den Gasbestandteilen erzeugt. Das verwendete Gas und die Gasmischung werden als Prozessgas bezeichnet. Grundsätzlich können dem Prozessgas auch gasförmige Stoffe wie Siloxan, Acrylsäuren oder Lösungsmittel oder andere Bestandteile beigemischt werden. Bestandteile des Atmosphärendruckplasmas können hochangeregte atomare Zustände, hochangeregte molekulare Zustände, Ionen, Elektronen, unveränderte Bestandteile des Prozessgases sein. Das Atmosphärendruckplasma wird nicht in einem Vakuum erzeugt, sondern üblicherweise in Luftumgebung. Das bedeutet, dass das ausströmende Plasma, wenn das Prozessgas nicht selbst schon Luft ist, zumindest Bestandteile der umgebenden Luft enthält.

Bei einer Coronaentladung nach obiger Definition bilden sich durch die angelegte hohe Spannung filamentäre Entladungskanäle mit beschleunigten Elektronen und Ionen. Insbesondere die leichten Elektronen treffen mit hoher Geschwindigkeit auf die Oberfläche mit Energien, die ausreichen, um die meisten Molekülbindungen aufzubrechen. Die Reaktivität der außerdem entstehenden reaktiven Gasbestandteile ist meist ein untergeordneter Effekt. Die aufgebrochenen Bindungsstellen reagieren dann mit Bestandteilen der Luft oder des Prozessgases weiter. Ein entscheidender Effekt ist die Bildung kurzkettiger Abbauprodukte durch Elektronenbeschuss. Bei Behandlungen höherer Intensität tritt auch ein signifikanter Materialabtrag ein.

Durch die Reaktion eines Plasmas mit der Substratoberfläche werden verstärkt die Plasmabestandteile direkt "eingebaut". Alternativ können auf der Oberfläche ein angeregter Zustand oder eine offene Bindungsstelle und Radikale erzeugt werden, die dann sekundär weiterreagieren, zum Beispiel mit Luftsauerstoff aus der Umgebungsluft. Bei manchen Gasen wie Edelgasen ist keine chemische Bindung der Prozessgasatome oder Moleküle an das Substrat zu erwarten. Hier findet die Aktivierung des Substrats ausschließlich über Sekundärreaktionen statt.

Der wesentliche Unterschied ist also, dass bei der Plasmabehandlung keine direkte Einwirkung diskreter Entladungskanäle auf die Oberfläche stattfindet. Die Wirkung findet also homogen und schonend, vor allem über reaktive Gasbestandteile statt. Bei einer indirekten Plasmabehandlung sind freie Elektronen möglicherweise vorhanden, aber nicht beschleunigt, da die Behandlung außerhalb des erzeugenden elektrischen Feldes stattfindet.

Die Plasmabehandlung ist also weniger zerstörend und homogener als eine Coronabehandlung, da keine diskreten Entladungskanäle auf die Oberflächen treffen. Es entstehen weniger kurzkettige Abbauprodukte des behandelten Materials, die eine Schicht mit negativem Einfluss auf der Oberfläche bilden können. Deswegen können oft bessere Benetzbarkeiten nach Plasmabehandlung gegenüber Coronabehandlung erzielt werden bei längerer Beständigkeit des Effekts.

Der geringere Kettenabbau und die homogene Behandlung durch Verwendung einer Plasmabehandlung tragen wesentlich zur Robustheit und Effektivität des gelehrten Verfahrens bei.

Das Plasmagerät der EP 0 497996 B1 weist recht hohe Gasströme im Bereich von 36 m³ pro Stunde, bei 40 cm Elektrodenbreite pro Spalt auf. Aus den hohen Strömungsgeschwindigkeiten resultiert eine geringe Verweilzeit der aktivierten Bestandteile auf der Oberfläche des Substrates. Des Weiteren gelangen auch nur solche Bestandteile des Plasmas bis zum Substrat, die entsprechend langlebig sind und durch einen Gasstrom bewegt werden können. Elektronen beispielsweise können nicht durch einen Gasstrom bewegt werden und spielen dabei also keine Rolle.

Nachteilig bei der genannten Plasmabehandlung ist jedoch die Tatsache, dass das auf die Substratoberfläche treffende Plasma hohe Temperaturen von im günstigsten Fall wenigstens 120 °C aufweist. Häufig besitzt das entstehende Plasma jedoch hohe Temperaturen von einigen 100 °C. Die bekannten Plasmakanonen führen zu einem hohen thermischen Eintrag in die Substratoberfläche. Die hohen Temperaturen können zur Schädigung der Substratoberfläche führen, wodurch neben den aktivierenden ungewünschte Nebenprodukte entstehen, die als LMWOM Low-Molecular-Weight-Oxidized Materials bekannt sind. Dieser hochoxidierte und wasserlösliche Polymerschrott, der mit dem Substrat nicht mehr kovalent verbunden ist, führt zu einer geringen Resistenz gegenüber Feucht-Warm-Klimabedingungen.

Es hat sich nun überraschenderweise gezeigt, dass bei einer Behandlung von Klebemasseoberflächen und Substratoberflächen vor dem Verkleben mit Niedertemperatur-Plasmadüsen ebenfalls eine deutliche Steigung der Klebekraft erzielt werden kann, wobei die Flächen stark aktiviert werden und die Verklebungsverbunde nach dem Aufeinanderkleben feucht-warm beständig sind.

In der WO 2012/152713 A1 wird ein Verfahren offenbart, bei dem für ein doppelseitiges Klebeband mit einer ersten äußeren haftklebrigen und einer zweiten äußeren hitzeaktivierbaren Seite, umfassend einen zumindest zweischichtigen Produktaufbau aus den Schichten A und B, die direkt miteinander in Kontakt stehen, eine Corona- oder Plasmavorbehandlung eingesetzt wird. Und zwar wird die Oberfläche der Schicht A, die direkt mit Schicht B in Kontakt steht, corona- oder plasmavorbehandelt, wobei die Corona- oder Plasmavorbehandlung in einer Atmosphäre aus Stickstoff, Kohlendioxid oder einem Edelgas oder einem Gemisch aus mindestens zwei dieser Gase erfolgt ist.

Aus der WO 2012/152714 A1 ist ein Verfahren zur Erhöhung der adhäsiven Eigenschaften von Haftklebemassen auf Untergründen mittels Plasmabehandlung bekannt und beschreibt die Behandlung von Haftklebmassen und Untergründen mittels verschiedenen Plasmaquellen.

Aus der WO 03/86031 A1 ist eine Atmosphärendruckplasmaanordnung mit einem ersten und einem zweiten Paar von vertikal angeordneten parallelen beabstandeten planaren Elektroden mit mindestens einer dielektrischen Platte zwischen dem ersten Paar, einer benachbarten Elektrode und mindestens einer dielektrischen Platte zwischen dem zweiten Paar neben einer Elektrode bekannt, so dass sich zwei Plasmabereiche ergeben. Die Atmosphärendruckplasmaanordnung weist ferner eine Einrichtung zum Transport eines Substrats durch einen ersten und einen zweiten Plasmabereich und einen Zerstäuber auf, der dazu geeignet ist, eine zerstäubte Flüssigkeit oder ein festes Beschichtungsmaterial in einen der Plasmabereiche zu bringen.

Aus der DE 10 2008 018 827 A1 ist eine Vorrichtung zur Erzeugung eines Atmosphärendruck-Plasmas mittels einer Bogenentladung bekannt, wobei die Bogenentladung mittels eines als Kathode wirkenden Piezoelements mit Primär- und Sekundärseite erzeugt wird.

Aus der US 2009/068375 A1 betrifft ein Verfahren zur Erzeugung eines Nicht-Gleichgewichts-Atmosphärendruck-Plasmas in einem Prozessgas und ein Verfahren zur Plasmabehandlung einer Oberfläche mit einem so erzeugten Nicht-Gleichgewichts-Atmosphärendruck-Plasma.

Aus der US 2008/118734 A1 beschreibt ein Verfahren zum Einbringen eines oder mehrerer aktiver Materialien in Beschichtungszusammensetzungen, die durch Plasmapolymerisation oder plasmaunterstützte chemische Gasphasenabscheidung (PE-CVD) erhalten werden.

Aus der DE 20 2008 008 980 U1 ist eine Vorrichtung zur Erzeugung eines Atmosphärendruck-Plasmas bekannt.

Es ist Aufgabe der Erfindung, ein eingangs genanntes Verfahren zum Verkleben zur Verfügung zu stellen, bei dem der entstehende Verklebungsverbund eine höhere Feuchte-Wärme-Beständigkeit aufweist.

Diese Aufgabe wird durch ein Verfahren mit den Merkmalen des Anspruchs 1 gelöst.

Es hat sich überraschend gezeigt, dass zum Verkleben einer Substratoberfläche einer Substratschicht mit einer Klebemasseoberfläche eines Acrylathaftklebstoffs eine Erhöhung der Klebekraft auch durch Niedertemperatur-Plasma insbesondere bei Atmosphärendruck erzielt werden kann, das in einer Niedertemperatur-Entladungskonfiguration erzeugt wird, indem die Substratoberfläche und die Klebemasseoberfläche mit dem Niedertemperatur-Plasma aktiviert wird und nach der Aktivierung die Substratoberfläche und die Klebemasseoberfläche zur Ausbildung eines Verklebungsverbundes aufeinandergeschichtet werden.

Unter einer Niedertemperatur-Entladungskonfiguration wird beispielsweise eine Konfiguration verstanden, die allgemein Plasma niedriger Temperatur erzeugt. Dabei wird ein Prozeßgas durch ein elektrisches Feld, das beispielsweise durch ein Piezoelement erzeugt wird, geleitet und dabei zum Plasma angeregt. Ein Plasmaentladungsraum ist der Raum in dem das Plasma angeregt wird. Das Plasma tritt aus einem Austritt aus dem Plasmaentladungsraum aus.

Unter einem Niedertemperatur-Plasma wird hier ein Plasma verstanden, das eine Temperatur beim Auftreffen auf die Oberfläche von höchstens 50 °C aufweist. Aufgrund der niedrigen Temperatur werden die Oberflächen weniger geschädigt, und es entstehen insbesondere keine ungewünschten Nebenprodukte, die sogenannten LMWOMs (Low-Molecular-Weight-Oxidized Materials). Diese LMWOMs führen insbesondere bei feuchten und warmen Umgebungsbedingungen zu einer Verringerung der Klebekraft der Klebemasse auf der Substratoberfläche.

Die niedrige Temperatur des Plasmas hat darüber hinaus den Vorteil, dass eine Plasmadüse des Plasmagenerators in einem sehr geringem Abstand von weniger als 2 mm über die behandelnde Oberfläche gefahren werden kann und dieser Abstand konstant unabhängig von den Eigenschaften der Oberfläche aufrechterhalten werden kann. Insbesondere kann dadurch die Substratoberfläche im gleichen Abstand der Plasmadüse aktiviert werden wie die Klebemasseoberfläche, was zu einer deutlichen Beschleunigung des Verfahrens führt. Bisher musste bei der Verwendung von Hochtemperatur-Plasmadüsen der Abstand des Plasmadüsenaustritts von der Oberfläche des Substrates auf jedes Material angepasst werden. Dieses geschieht gemäß dem Stand der Technik dadurch, dass die Behandlungsdistanz zur Materialoberfläche erhöht bzw. verringert wird. Das ist jedoch mit einem erhöhten Zeitaufwand und einer Verkomplizierung des Aktivierungsverfahrens verbunden.

Unter Atmosphärendruck wird hier der Umgebungsdruck verstanden, wobei eine maximale Abweichung vom herrschenden Umgebungsdruck von höchstens 0,1 bar, bevorzugt 0,05 bar erfindungsgemäß unter dem Begriff Umgebungsdruck subsummiert wird. Dieser Atmosphärendruck liegt zumindest im Wirk- und/oder Entladungsbereich vor.

Erfindungsgemäß ist vorgesehen, dass der Wirk- und/oder Entladungsbereich nicht unmittelbar gekapselt oder baulich eingeschlossen ist.

Dadurch, dass der Wirk- und/oder Entladungsbereich nicht umschlossen ist, kann die Plasmabehandlung der einzelnen Oberflächen kontinuierlich erfolgen. Das zu behandelnde Teil muss nicht - wie bisher üblich - aus einer Vakuum- oder Unterdruckkammer entfernt werden, das neue Teil in die Vakuum- oder Unterdruckkammer eingeführt werden und ein Unterdruck in der Vakuum- oder Unterdruckkammer erzeugt werden.

Es werden für das erfindungsgemäße Verfahren Haftklebestoffe, sogenannte PSA verwendet, und zwar Klebestoffe aus der Gruppe der Acrylate. Als Substrat werden insbesondere Kunststoffe wie Polypropylene oder LSE-Lacke wie Apo 1.2 verwendet.

Das Niedertemperatur-Plasma wird günstigerweise durch eine Plasmadüse erzeugt, die auf einem piezo-elektrischen Effekt beruht. Dabei wird ein Prozessgas in einem Plasmaentladungsraum an einem piezo-elektrischen Material vorbeigeführt. Das piezoelektrische Material wird als Primärbereich über zwei Elektroden durch eine NiedervoltWechselspannung in Schwingungen versetzt. Die Schwingungen werden in den weiteren Sekundärbereich des piezo-elektrischen Materials übertragen. Aufgrund der entgegengesetzten Polarisationsrichtungen der mehrschichtigen Piezokeramik werden elektrische Felder generiert. Die entstanden Potentialdifferenzen ermöglichen die Erzeugung von Plasmen mit geringen Temperaturen von höchstens 50 °C. Geringe Wärmebildung kann nur durch die mechanische Arbeit in der Piezokeramik entstehen. Bei gängigen Plasmadüsen mit lichtbogenähnlichen Entladungen kann dies nicht erreicht werden, da die Entladungstemperatur bei über 900 °C zur Anregung des Prozessgases liegt.

In einer Variante der Erfindung wird das Plasma mit einer Plasmadüseneinheit ohne zusätzlicher Einleitung eines oder mehrerer Precursormaterialien in den Arbeitsgasstrom oder in den Plasmastrahl verwendet.

Die Aufgabe wird auch durch die Verwendung eines Niedertemperatur-Plasmagenerators zur Aktivierung von Oberflächen eines Verklebungsverbundes mit einer Klebemassenoberfläche und einer Substratoberfläche gelöst.

Als Niedertemperatur-Plasmagenerator können insbesondere der von der *Reinhausen Plasma* GmbH hat zur Verfügung gestellte *Piezobrush PZ1* und der *Piezobrush PZ2* verwendet werden.

Die Erfindung wird anhand von mehreren Ausführungsbeispielen in 14 Figuren beschrieben, dabei zeigen:
- Fig. 1a: die Aktivierung einer Substratoberfläche einer Verklebung,
- Fig. 1b: die Aktivierung einer Klebemasseoberfläche der Verklebung,
- Fig. 1c: die Aktivierung der Substrat- und der Klebemasseoberfläche der Verklebung,
- Fig. 2: Graphik zur Plasmaaktivierung vom *ACX^{plus} 7074-Kern*
- Fig. 3: Graphik zum Potential einer Plasmabehandlung bei verschiedenen Klebemassen und *ACX^{plus}-Kernen*
- Fig. 4: Graphik zur Beständigkeit einer plasmaaktivierten Verklebung ohne Feuchteeinfluss
- Fig. 5a, 5b: Beständigkeit plasmaaktivierter Verklebung bei 40°C/80% rel. Feuchte
- Fig. 6: Klebekraftmessung von ACX^{plus} 7812 bei Piezo-Plasmaaktivierung auf LSE-Lack
- Fig. 7: Klebekraftmessung von ACX^{plus} 7812 bei Piezo-Plasmaaktivierung auf Polypropylen

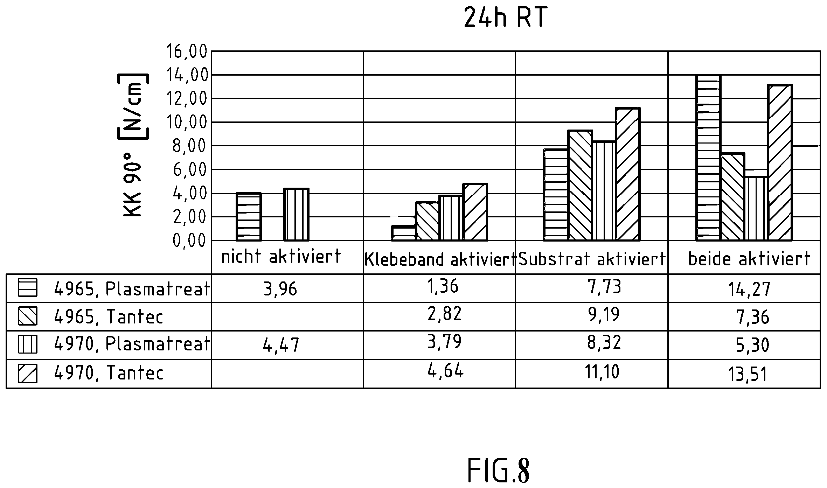

- Fig. 8: Aktivierungseffizienz *Corona vs. Plasma*
- Fig. 9a: eine schematische Ansicht des Funktionsprinzips eines Niederplasmatemperatur-Plasmagenerators,
- Fig.9b: im Niederplasmatemperatur-Plasmagenerator gemäß Fig. 9a auftretende Polarisationsrichtungen,

Es werden eigene tesa^{®}-Klebmasse-Bausteine unter Plasmabehandlungen auf ihr Verhalten bewertet. Dazu werden verschiedene Substratschichten 1 mit zugehörigen Substratoberflächen 2 ausgewählt. Plasmabehandlungen werden zunächst mit der *Plasmatreat*-Technologie (OpenAir Plasma) durchgeführt. Dazu wird ein Plasmajet der Firma *Plasmatreat,* Steinhagen verwendet. Bei dem Plasmajet handelt es sich um eine Plasmakanone zur Erzeugung eines Atmosphärendruckplasmas. Es wird eine Substratoberfläche und/oder eine Klebmasseoberfläche 2 mit dem Atmosphärendruckplasma behandelt.

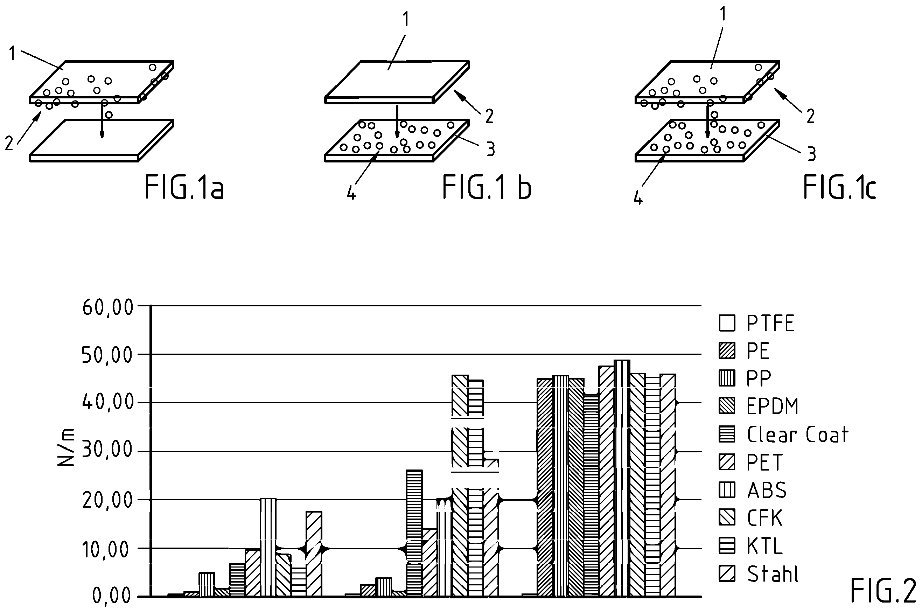

Beim Auftragen einer Klebemasseschicht 3 auf die Substratschicht 1 ergeben sich für die Plasmabehandlung grundsätzlich drei Behandlungsoptionen. Erstens kann nur die Substratoberfläche 2 gemäß Fig. 1a aktiviert werden. Es kann zweitens gemäß Fig. 1b nur eine Klebemasseoberfläche 4 einer Klebemasseschicht 3 aktiviert werden oder es kann drittens gemäß Fig. 1c sowohl die Substratoberfläche 2 als auch die Klebemasseoberfläche 4 aktiviert werden. Die drei Möglichkeiten sind in den Fig.1a, 1b und 1c dargestellt. Erfindungsgemäß ist nur die in Fig. 1c dargestellte Variante.

In Fig. 2 ist eine Versuchsreihe dargestellt. Es wird tesa^{®} ACX^{plus} 7074 als Klebemasseschicht 3 gewählt. Er werden verschiedene Substrate gewählt, die in Fig. 2 mit ihren üblichen Kürzeln benannt sind. Die 10 Balken pro Behandlungsoption entsprechen von links nach rechts den zehn Kürzeln rechts der Graphik von oben nach unten.

Es zeigt sich gemäß Fig. 2, dass die Aktivierung beider Verklebungsoberflächen in nahezu allen Fällen synergistisch wirkt. D.h., dass die Aktivierung der Klebemasseoberfläche und der Substratoberfläche 2 in den relevanten geprüften Fällen die beste Grenzfläche zur Verbesserung von adhäsiven Eigenschaften ist.

Es kann auch festgestellt werden, dass die Klebekraft einer Klebeverbindung zwischen Substratschicht 1 und Klebemasseschicht 3 bei der reinen Substrataktivierung nur in Ausnahmen das Niveau der beidseitigen Behandlung erreicht. Eine alleinige Klebemassebehandlung kann in speziellen Materialkombinationen aufzeigen, dass die Qualität einer beidseitigen Behandlung erreicht werden kann.

Die Bestimmung der Klebekraft eines Klebebandes auf einer Prüfplatte aus Stahl erfolgt bei einem Prüfklima von 23 °C +/- 1 °C Temperatur und 50 % +/- 5 % rel. Luftfeuchte. Die Klebebänder werden als Prüfmuster auf 20 mm Breite zugeschnitten und auf eine Stahlplatte geklebt. Die Prüfplatte wird vor der Messung gereinigt und konditioniert. Dazu wurde die Stahlplatte zunächst mit Aceton abgewischt und danach 5 min an der Luft liegen gelassen, damit das Lösungsmittel abdampfen kann. Die der Prüfplatte abgewandte Seite des einschichtigen Prüfmusters wird dann mit 36 µm geätzter PET-Folie abgedeckt, wodurch verhindert wird, dass sich das Klebeband bei der Messung dehnt. Danach erfolgt das Anrollen des Prüfmusters auf dem Stahluntergrund. Hierzu wird das Tape mit einer 4 kg - Rolle fünfmal hin und her mit einer Anrollgeschwindigkeit von 10 m/min überrollt. 20 min nach dem Anrollen wird die Stahlplatte in eine spezielle Halterung geschoben, die es ermöglicht, das Prüfmuster in einem Winkel von 90 ° senkrecht nach oben abzuziehen. Die Klebekraftmessung erfolgt mit einer Zwick-Zugprüfmaschine. Die Messergebnisse sind in N/cm angegeben und sind gemittelt aus drei Einzelmessungen.

Eine wichtige Erkenntnis ist, dass die Aktivierung von Verklebungsoberflächen von denen eine eine tesa^{®}ACX^{plus}-Oberfläche eines tesa^{®}ACX^{plus} Klebebandes ist, eine signifikante Verbesserung der Klebekräfte erzielen kann. Bei den ACX^{plus} Klebebändern handelt es sich um kommerziell erhältliche Klebebänder der Firma tesa^{®}. Die ACX^{plus} Klebebänder weisen einen viskoelastischen Träger und zwei sich am Träger gegenüberliegende klebende Oberflächen auf, die aus demselben oder einem modifizierten chemischen Aufbau bestehen. Damit erstreckt sich die die Klebekraft steigernde Wirkung auch auf reine viskoelastische Trägersysteme. Typischerweise sind die viskoelastischen Träger für die gewünschten Eigenschaften in dem Fertigprodukt (Dicke, Dämpfungseigenschaften, ...) verantwortlich und nicht primär für die Adhäsionseigenschaften entwickelt. Daher werden die Trägersysteme häufig mit eigenen Funktionsklebemasseschichten laminiert, um die adhäsiven Eigenschaften zu erzeugen.

ACX^{plus} Trägersysteme weisen einen einschichtigen Aufbau aus einer Acrylatschicht auf. In den überwiegenden Fällen sind die Leistungseigenschaften der plasmaaktivierten viskoelastischen ACX^{plus} Trägersysteme gemäß Fig. 2 vergleichbar mit plasmaaktivierten Dreischicht-Aufbauten, aus einer Trägerschicht auf deren beiden Oberflächen Klebemasseschichten aufgebracht sind. Die Klebekräfte können aber auch deutlich darüber liegen.

Fig. 2 zeigt die im Standardverfahren gemessene Klebekraft einer Klebeverbindung, zwischen der ACX^{plus}7074 Klebemasse ohne Funktionsmasse, die hier eine harzmodifizierte Acrylatklebemasse ist, auf zehn verschiedenen Substratoberflächen 2. Bei den Substratoberflächen 2 handelt es sich um PTFE (Polytetraflurethylen,), PE (Polyethylen), MOPP (monoaxial verstreckte Folien aus Polypropylen), PU (Polyurethan), EPDM (Ethylen-Propylen-Dien Kautschuk), ClearCoat der Firma BASF, PET (Polyethylenterephtalat), ABS (Acrylnitril-Butadien-Styrol), CFK (carbonfaserverstärkter Kunststoff), KTL (kathodische Tauchlackbeschichtung) und Stahl. Dabei werden drei Behandlungsoptionen mittels Plasmabehandlung gewählt. Die linke Balkengruppe stellt die Klebekraft einer ACX^{plus} 7064 Klebeoberfläche auf den zehn oben genannten, verschiedenen Substratoberflächen ohne Plasmabehandlung einer der beiden Verklebungsflächen 2, 4 dar.

Die mittlere Balkengruppe zeigt die Klebekraft, wenn nur die Klebemasseoberfläche 4 mit dem Atmosphärendruckplasma aktiviert wird und die rechte Balkengruppe stellt die Klebekräfte dar, wenn sowohl die Klebemasseoberfläche 4 als auch die jeweilige Substratoberfläche 2 aktiviert werden.

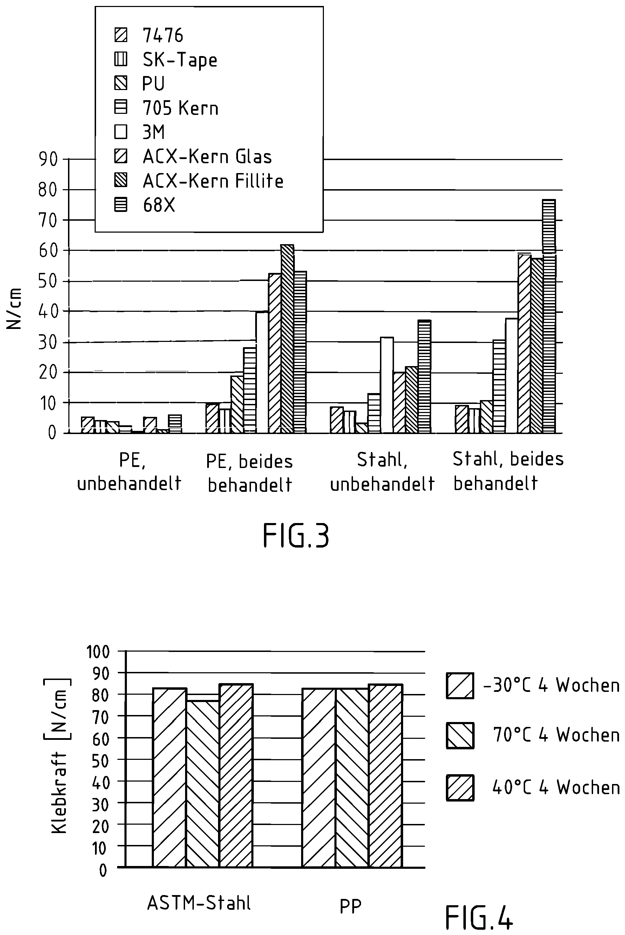

Die Fig. 3 beinhaltet in einer Übersicht die Ergebnisse der Klebekraftprüfung verschiedener plasmabehandelter Klebemassen auf PE (Polythylen)-Oberflächen oder Stahloberfläche.

Die erste Balkengruppe betrifft die Klebekraftmessungen auf unbehandelter PE-Oberfläche, die zweite Balkengruppe Klebekraftmessungen auf PE-Oberflächen wenn sowohl die Klebemasseoberfläche als auch die Substratoberfläche aktiviert werden. Die dritte Balkengruppe betrifft Klebekraftmessungen auf einer Stahloberfläche ohne Plasmabehandlung, einer der beiden Verklebungsflächen und die vierte Balkengruppe betrifft die Klebekraftmessungen verschiedener Klebemassen auf einer Stahloberfläche, wenn beide Verklebungsflächen mit Plasma aktiviert sind.

Bei den Klebemassen handelt es sich um ACX^{plus} 7476 (erfindungsgemäß), MOPP, PU (Polyurethan), ACX^{plus} 705x der Firma tesa^{®} (erfindungsgemäß), eine Klebemasse der Firma *3M,* dabei handelt es sich um eine VHB-Qualität der Firma *3M* (erfindungsgemäß), ACX^{plus} mit Glas oder Fillite Kernen (erfindungsgemäß) und um ACX^{plus} 68xx einschichtig, geschäumt (erfindungsgemäß).

Die Ergebnisse zeigen, dass die Plasmabehandlung auf alle Klebemassen einen positiven Effekt besitzt, aber die absoluten Klebekräfte unterschiedlich stark ausgeprägt sind. Es ist ein moderater Anstieg der Klebekraft für das Klebeband mit ACX^{plus} 7476 sowie für die reine PU Klebemasse zu verzeichnen, teilweise begrenzt über Kohäsionsversagen und Mischbrüche. Es fällt aber auf, dass die untersuchten tesa Acrylatkerne ohne Klebemasse, ACX^{plus}-Kern mit Glashohlkugeln und ACX^{plus}-Kern mit Fillite stark auf die Plasmabehandlung reagieren und eine deutliche Klebekraftsteigerung auf PE und Stahl bewirken kann. Auch das 3M-Produkt (Reinacrylat, einschichtig, mit Hohlglaskugeln) profitiert von der Behandlung. Einschichtige Acrylatkerne weisen ein hohes Potential für Plasmaaktivierungen auf.

Eine grundsätzliche Potentialbewertung wird in Tabelle 1 gezeigt:

**Tabelle 1**

| **ACXplus** | **Untersuchung von ...** | **Starke Verbesserung durch Plasma möglich?** |
|---|---|---|
| **Eigenschaften** | Klebkraft | Ja |
| | Scherfestigkeit | Ja |
| | Sofortklebkraft | Ja |
| **Substrate** | EPDM, PP, PE, PET, ... | Ja |
| | Stahl, Alu, ... | Ja |
| | Lacke | Ja |
| | Teflon | Nein |
| **Massen** | Acrylat-Klebmassen | Ja |
| | Naturkautschuk | Ja |
| | Synthesekatuschuk | Ja |
| | PU | Ja |
| | Ac-SBC-Blends/HPSR | Ja |
| **Aufbau** | Konventionelle Klebebänder mit Folientäger | Ja |
| | ACXplus-Kerne: Reinacrylat, geschäumt, gefüllt | Ja |
| | d/s-Schaumfixe | Ja |

Die Beständigkeit von beidseitigen plasmaaktivierten Verklebungen von ACX^{plus} 6812 Klebemasse auf ASTM-Stahl und PP nach reinen Temperaturlagerungen, bei Temperaturen von -30°C, 40°C und 70°C über 4 Wochen hat sich gemäß Fig. 4 als äußerst stabil erwiesen. In keiner Oberflächenkombination konnte festgestellt werden, dass die Klebekraft über die Zeit reduziert wurde. Es werden häufig höhere Werte gegenüber unbehandelten Referenzen erzielt.

Langzeitalterungsbeständigkeit unter Feuchtigkeit wird maßgeblich durch die Qualität der Klebegrenzflächen beeinflusst. Ziel einer Plasmabehandlung ist es, passende reaktive Zentren auf der Klebemasseoberfläche zu schaffen, um die Bindung zum Substrat zu erhöhen und Alterungserscheinungen durch z.B. feucht-warme Lagerbedingungen abzumildern oder zu eliminieren.

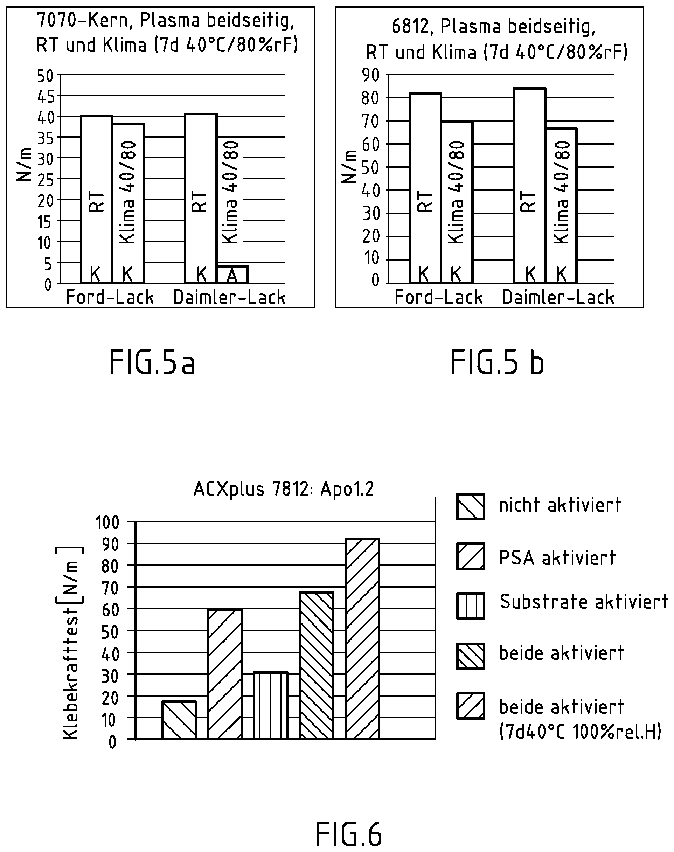

Wie im Vorangegangenen beschrieben, wirkt ein Plasma nicht im Volumenbereich einer Klebemasse, kann aber über die plasmabedingte Hydrophilisierung ein Vorschreiten einer Wasserfront in die Grenzfläche verursachen oder fördern. Die aufgenommene Feuchtigkeit löst in der Grenzfläche physikalische und chemische Veränderungen aus. Hier können über geeignete Parameter der Plasmatreat-Behandlung wie Abstand der Düse von der Verklebungsoberfläche und der Geschwindigkeit eine Feucht-Warm-Schwäche eliminiert bzw. reduziert werden wie die Ergebnisse gemäß Fig. 5a und Fig. 5b zeigen.

In Fig. 5a ist die Klebekraft einer ACX^{plus} 7070 Klebemasse auf zwei Automobillacken nach sieben Tagen bei Lagerung der Verklebung unter Raumtemperatur und bei 40°C und 80% relativer Luftfeuchtigkeit dargestellt. In Fig. 5b ist eine zweite Messung bezüglich einer ACX^{plus} 6812 Klebemasse unter denselben oben dargestellten Klimabedingungen durchgeführt worden. Das jeweils linke Balkenpaar in Fig. 5a und Fig. 5b betreffen einen Ford-Lack und das jeweils rechte Balkenpaar in Fig. 5a, Fig. 5b einen Daimler- Lack. In allen Versuchsanordnungen sind beide Verklebungsflachen 2, 4 mit einem Plasmajet aktiviert.

Aber auch ohne Optimierung und Verwendung von Standardparametern wie 12 mm Abstand, 5 m/min Behandlungsgeschwindigkeit des Plasmajets sind häufig Materialkombinationen schon auf Feucht-Warm-Behandlungen resistent. Siehe dazu Tabelle 2.

**Tabelle 2: Feucht-Warm-Beständigkeit variiert je nach Substrat**

| **Bedingungen** | **KK 90°** | **EPDM T30** | **PP GF30** | **PP Testplatte** |
|---|---|---|---|---|
| **3d/RT** | N/cm | **66*** | **61*** | **63*** |
| **Klimawechsel 1000h 38°C/95% r.F.** | | **54*** | **52*** | **11**** |
| **Klimawechsel 10d 85°C/-40°C; 85% r.F.** | | **57*** | **55*** | **9**** |
| **BMW Klimawechsel PR303.5d 240 h +85°C/60% r.F.; -30°C** | | **63*** | **62*** | **16**** |
| ***=Kohäsionsbruch/oberflächennah kohäsiv** | | | | |
| ****=Adhäsionsbruch** | | | | |

Die Tabelle 2 stellt Klebekraftmessungen des ACX^{plus} 6812 auf drei verschiedenen Substratoberflächen dar. Die erste Spalte betrifft eine Klebekraftmessung der Klebeverbindung nach drei Tagen bei Raumtemperatur, die zweite Spalte betrifft die Klebekraftmessung nach 1000h bei 38 °C und 95 % relativer Luftfeuchtigkeit. Die dritte Spalte beschreibt die Klebekraftmessung nach 10 Tagen bei einem Klimawechsel und die vierte Spalte eine Klebekraftmessung noch 5 Tagen bei einem Klimawechsel.

Der thermische Einfluss der Plasmatreat-Behandlung wird maßgeblich für die weiteren ungewünschten Nebeneffekte verantwortlich gemacht, der auf PP-Substrat wie auch der Klebemasse Low-Molecular-Weight-Oxidized Materials (LMWOM) erzeugt. Entsprechend hochoxidierte Polymer- oder Oligomerschichten sind nicht ausreichend mit den Polymeren im Klebemassevolumen verbunden und sie sind zusätzlich wasserquellbar oder -löslich.

Es wird festgestellt, dass die Entladungstechnik einer Plasmabehandlung eine wesentliche Rolle auf die Feuchtigkeitsbeständigkeit nimmt. Typischerweise werden bei einem Plasmajet der "after glow" über einen Lichtbogen oder eine lichtbogenähnlichen Entladung erzeugt.

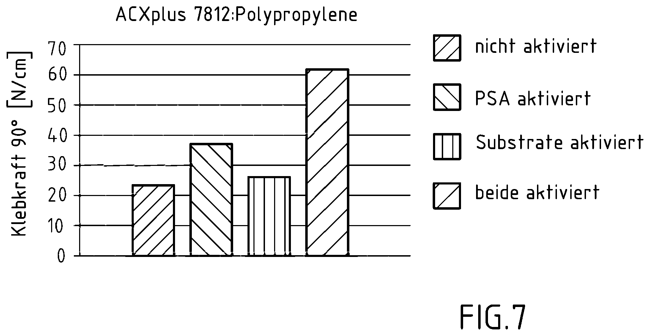

Eine andere Technologie der Firma *Reinhausen Plasma* GmbH erzeugt das Plasma über einen piezoelektrischen Effekt, welcher durch entgegengesetzte Polarisationsrichtungen des Kristalls ermöglicht wird. Resultierend aus dieser Entladungstechnik entsteht gegenüber einem Lichtbogen ein kaltes, nicht-thermisches Plasma. Die Temperaturen liegen bei nahezu Raumtemperatur. Thermische Überbehandlungen und somit die Bildung von LMWOM kann damit verhindert oder zumindest verringert werden. Dadurch können eine stabile Feucht-Warm-Resistenz der Klebemasse auf LSE-Automobillacken und niederenergetischen Polymeren nachgewiesen werden, gemäß Fig. 6 und Fig. 7. In dem Fall der Lackverklebung ist ein starker Anstieg der adhäsiven Eigenschaften mit Plasmaaktivierung positiv aufgefallen.

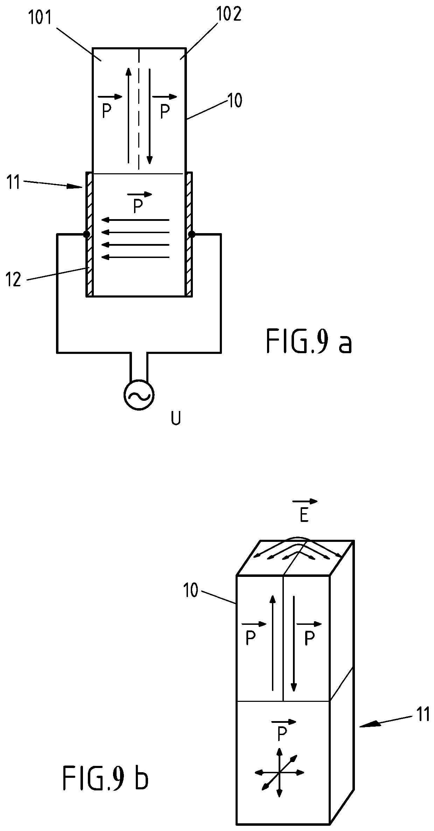

In den Figuren 9a und 9b wird schematisch die Funktionsweise der auf einem Piezoeffekt beruhenden Plasmakanone dargestellt. Dabei ist eine vorzugsorientierte Piezo-Keramik beispielsweise Blei, Zirkonat-Titanate. Bekannte Materialien mit Piezo-Eigenschaften sind Quarz als piezoelektrisches Kristall, daneben sind piezoelektrische Keramiken wie das oben genannte Blei, Zirkonat-Titanate denkbar.

Im Ausführungsbeispiel gemäß Fig. 9a sind 9b gegensätzlich orientierte Piezo-Keramiken in einem Sekundärbereich 10 nebeneinander angeordnet, während in einem Primärbereich 11 ein Kondensator 12 mit zwei sich gegenüberliegenden Kondensatorplatten vorgesehen ist, wobei jede der Kondensatorplatten fest mit einer der Piezo-Elemente 101, 102 verbunden ist. Durch Anlegen einer Wechselspannung U an den Kondensatorplatten entsteht eine mechanische Schwingung der Kondensatorplatten des Kondensators 12 durch Umpolung. Die mechanische Schwingung wird auf die Piezo-Elemente 101,102 übertragen und erzeugt in dessen den Kondensator angewandten Ende eine in der Frequenz der mechanischen Schwingung der Kondensatorplatten entsprechende wechselnde Potentialdifferenz. Das durch die Potentialdifferenz erzeugte elektrische Feld E ist in Fig. 9b dargestellt.

Bei den Piezo-Elementen 101,102 handelt es sich selbst um einen Isolator, sodass geringe Sicherheitsanforderungen zu erfüllen sind. Die Frequenz der Niedervoltwechselspannung U an den Kondensatorplatten entspricht der Piezo-Resonanzfrequenz und liegt in der Größenordnung zwischen 10 kHz und 500 kHz. Somit wird eine Niedervoltwechselspannung, die am Kondensator anliegt, in eine mechanische Verformung umgewandelt, die wiederum an den freien Enden des Piezoelementes 101, 102 eine elektrische Hochvoltwechselspannung erzeugt. Das Prinzip des Piezo-Elementes ist beispielsweise in der EP 2 168 409 B1 dargestellt. Piezo-Elemente eignen sich insbesondere in Verbindung mit an ihnen vorgesehenen Kühlanordnungen, sodass das durch das elektrische Wechselfeld erzeugte Plasma nachträglich gekühlt werden kann und aus einer Austrittsdüse der Plasmakanone, die nicht explizit dargestellt ist, ein sogenanntes Niederplasmatemperatur-Plasma austreten kann.

Niederplasmatemperatur-Plasmakanonen werden von der Firma *Reinhausen Plasma* GmbH auf dem Markt zur Verfügung gestellt. Der *Piezobrush PB1* erzeugt dabei Plasmatemperaturen von nur noch 70 °C. Das Plasma des *Piezobrush PB2* hat eine Temperatur von 120 °C - 250 °C; abhängig von der Austrittsdüse.

Der *Piezobrush PZ2* stellt ein Plasma mit einer Plasmatemperatur von weniger als 50 °C her. Es ergeben sich Klebekraftmessungen in Fig. 6 und Fig. 7.

Der *Piezobrush PZ2* wird in einem Abstand von 5 mm -10 mm und einer Geschwindigkeit von 5 m pro Minute über eine Substratoberfläche bzw. eine Klebemitteloberfläche geführt und bereitet die Oberflächen damit für den Klebevorgang vor.

Aufgrund der geringen Plasmatemperatur von weniger als 50 °C kann dieselbe Plasmakanone sowohl zur Behandlung der Substratoberfläche als auch zur Behandlung der Klebemitteloberfläche verwendet werden. Bei der Substratoberfläche handelt es sich in Fig.6 um einen LSE_Lack Apo1.2 und in Fig. 7 um PP. Bei der Klebemitteloberfläche handelt es sich um die Oberfläche des ACX^{plus} 7812-Klebebandes.

Fig. 6 und Fig. 7 betreffen Klebekraftmessungen bei denen eine Substratoberfläche 2, mit einer Klebefläche 4 des doppelseitigen Klebebands ACX^{plus} 7812 der Firma tesa^{®} beklebt wird.

In einem ersten Schritt des erfindungsgemäßen Verfahrens wird die Substratoberfläche, beispielsweise eine Metall- oder Kunststoffoberfläche, mit dem *Piezobrush PZ2* behandelt. In einem zweiten Verfahrensschritt wird eine Außenseite des Klebebandes ACX^{plus} 7812 mit demselben *Piezobrush PZ2* aktiviert. Das Klebeband ACX^{plus} 7812 besteht aus einer Acrylatschicht, deren beide äußeren Oberflächen haftklebrig sind. Die beiden Haftklebestoffoberflächen sind normalerweise mit einer Schutzfolie überzogen, die vor dem Klebevorgang abgezogen wird. Erfindungsgemäß wird die Außenseite der einen Haftklebestoffschicht mit dem *Piezobrush PZ2* zur Vorbereitung des Klebevorganges aktiviert. Dabei wird der *Piezobrush* in derselben Entfernung von etwa 2 mm - 5 mm über die Außenseite der Klebestoffschicht verfahren, und danach werden die aktivierte Substratschicht 1 und die aktivierte Haftklebestoffschicht 4 aufeinandergedrückt.

Abb. 6 zeigt die Ergebnisse eines Klebekrafttestes gemäß Teststandard bei dem ein 1 cm breites Klebeband auf eine Substratoberfläche gemäß oben beschriebenem Verfahren aufgebracht wird. Der in Grafik 1 dargestellte linke Balken zeigt die aufzuwendende Kraft bei dem Abziehen des doppelseitigen Klebebandes in einem Winkel von 90°, wenn beide Flächen, das heißt sowohl die Substratoberfläche 2 als auch die Haftklebemitteloberfläche 4 unvorbehandelt sind. Der zweite Balken zeigt das Haftklebeband in dem Test nur bei Aktivierung der Außenseite der Haftklebemittelschicht, der dritte Balken die Klebekraft bei ausschließlicher Aktivierung der Substratschicht, wobei es sich bei dem Substrat um einen LSE-Lack, nämlich APO 1.2 handelt. Der vierte Balken zeigt die aufzuwendende Kraft zum Abziehen des Klebebandes, wenn sowohl die Substratoberfläche als auch die Haftklebestoffoberfläche mit dem *Piezobrush PZ2* vorbehandelt wurden. Der fünfte Balken zeigt die Klebekraft nach Lagerung (7 Tage, 40 °C bei 100 % rel. Feuchte).

In der Fig. 7 ist die Klebekraft für dieselbe Testfolge für das doppelseitige Klebeband ACX^{plus} 7812 bei einem Aufkleben auf eine PP-Schicht, d.h. eine Polypropylenschicht (PP) dargestellt. Auch hier bedeutet der erste Balken die Klebekraft bei unbehandelten Oberflächen. Der zweite Balken die Klebekraft, wenn nur die Haftklebemittelaußenfläche behandelt ist.

Der vierte Balken zeigt die aufzuwendende Kraft zum Abziehen des Klebebandes, wenn sowohl die Substratoberfläche als auch die Haftklebestoffoberfläche mit dem *Piezobrush PZ2* vorbehandelt wurden. Der fünfte Balken zeigt die Klebekraft nach Lagerung (7 Tage, bei 40 °C und bei 100 % rel. Feuchte).

Hohe Klebekräfte nach einer Feucht-Warm-Lagerung nach 7 Tagen bei 40 °C 100%iger relativer Feuchte bzw. bei 85 °C und 85 % relativer Feuchte können durch die Niedertemperatur-Plasmabehandlung gegenüber einer RT-Lagerung (Raumtemperaturlagerung) erreicht werden.

### Bezugszeichenliste

- 1: Substratschicht
- 2: Substratoberflächen
- 3: Klebemasseschicht
- 4: Klebemasseoberfläche

- 10: Sekundärbereich
- 11: Primärbereich
- 12: Kondensator

- P: Polarisationsrichtung
- U: Wechselspannung

- 101: Piezo-Elemente
- 102: Piezo-Elemente

## Patentansprüche

1. Verfahren zum Verkleben einer Substratoberfläche (2) einer Substratschicht (1) mit einer Klebemasseoberfläche (4) einer Klebemasse (3),
indem
ein Niedertemperatur-Plasma in einer Niedertemperatur-Entladungskonfiguration bei Atmosphärendruck erzeugt wird,
die Substratoberfläche (2) und die Klebemasseoberfläche (4) mit dem Niedertemperatur-Plasma aktiviert wird und danach
zur Ausbildung eines Verklebungsverbundes die Substratoberfläche (2) und die Klebemasseoberfläche (4) aufeinandergeschichtet werden,
wobei das Plasma erzeugt wird, indem ein Prozessgas an einer piezoelektrischen Elektrode (101, 102) vorbeigeführt wird und dadurch ein sich zwischen der piezoelektrischen Elektrode (101, 102) und einer geerdeten Elektrode ausbildendes Spannungsfeld angeregt wird,
**dadurch gekennzeichnet, dass**
die piezoelektrische Elektrode (101, 102) gekühlt wird und eine Temperatur des aus einem Plasmaentladungsraum austretenden Plasmas höchstens 50 °C beträgt, wobei die Klebemasseoberfläche (4) und die Substratoberfläche (2) mit derselben Niedertemperatur-Entladungskonfiguration bei gleicher Plasmatemperatur behandelt werden,
wobei als Klebemasse (3) ein Acrylathaftklebstoff verwendet wird.

2. Verfahren nach Anspruch 1,
**dadurch gekennzeichnet, dass** der Plasmaentladungsraum in einem Abstand von weniger als 15 mm über die zu behandelnde Oberfläche (2, 4) gefahren wird.

3. Verfahren nach Anspruch 1 oder 2,
**dadurch gekennzeichnet, dass** eine Substratschicht (1) mit einem Stoff aus der Gruppe PTFE, PE, PP, EPDM, ClearCoat, PET, ABS, CFK, KTL, Glas oder Stahl verwendet wird.

## Claims

1. A method for bonding a substrate surface (2) of a substrate layer (1) to an adhesive surface (4) of an adhesive (3),
in which a low temperature plasma in a low temperature discharge configuration is generated at atmospheric pressure,
the substrate surface (2) and the adhesive surface (4) are activated with the low temperature plasma, and thereafter
the substrate surface (2) and the adhesive surface (4) are layered one on top of the other in order to form a compound bonded structure,
wherein the plasma is generated by passing a process gas in front of a piezoelectric electrode (101, 102) and thereby exciting a voltage field which forms between the piezoelectric electrode (101, 102) and an earthed electrode,
**characterized in that**
the piezoelectric electrode (101, 102) is cooled and a temperature of the plasma emerging from a plasma discharge chamber is at most 50°C, wherein the adhesive surface (4) and the substrate surface (2) are treated with the same low temperature discharge configuration at the same plasma temperature,
wherein a pressure-sensitive acrylate adhesive is used as the adhesive (3).

2. The method as claimed in claim 1,
**characterized in that** the plasma discharge chamber is moved over the surface (2, 4) to be treated at a distance of less than 15 mm.

3. The method as claimed in claim 1 or claim 2,
**characterized in that** a substrate layer (1) with a substance selected from the group: PTFE, PE, PP, EPDM, ClearCoat, PET, ABS, CRP, CEC, glass or steel, is used.

## Revendications

1. Procédé destiné à réaliser une liaison par collage entre une surface de substrat (2) d'une couche de substrat (1) et une surface de masse d'adhésif (4) d'une masse d'adhésif (3),
en générant, à pression atmosphérique, un plasma basse température dans une configuration de décharge à basse température,
la surface de substrat (2) et la surface de masse d'adhésif (4) étant activée par le plasma basse température, pour ensuite
empiler la surface de substrat (2) et la surface de masse d'adhésif (4) afin de former l'élément composite collé,
ledit plasma étant généré en faisant passer un gaz de traitement à proximité d'une électrode piézoélectrique (101, 102) pour ainsi exciter un champ de tension qui se forme entre l'électrode piézoélectrique (101, 102) et une électrode de mise à la terre,
**caractérisé en ce que**
l'électrode piézoélectrique (101, 102) est refroidie et une température du plasma, lors qu'il sort d'une chambre de décharge de plasma, est inférieure ou égale à 50 °C, la surface de masse d'adhésif (4) et la surface de substrat (2) étant traitées avec la même configuration de décharge à basse température à la même température de plasma,
un adhésif d'acrylate sensible à la pression étant mis en œuvre comme masse d'adhésif (3).

2. Procédé selon la revendication 1,
**caractérisé en ce que** l'on fait passer la chambre de décharge de plasma sur la surface à traiter (2, 4) à une distance inférieure à 15 mm.

3. Procédé selon les revendications 1 ou 2,
**caractérisé en ce que** l'on met en œuvre une couche de substrat (1) comportant une matière issue du groupe de PTFE, PE, PP, EPDM, ClearCoat, PET, ABS, PRFC, dépôt par cataphorèse, verre ou acier.
